# EUROPEAN PATENT SPECIFICATION

(11) **EP 0 383 506 B1**
(45) Date of publication and mention of the grant of the patent: **13.12.1995**
(21) Application number: 90301431.4
(22) Date of filing: 12.02.1990
(51) Int. Cl.: G06F 9/44, G06F 9/46

(54) **Method and system for mutual exclusive resource control**
Verfahren und System zur gegenseitig ausschliessenden Betriebsmittelsteuerung
Méthode et système pour la commande mutuellement exclusive de ressources

(30) Priority: 13.02.1989 JP 31146/89
(43) Date of publication of application: 22.08.1990
(73) Proprietor: International Business Machines Corporation, Armonk, N.Y. 10504 (US)
(72) Inventor: Hasegawa, Masaki, Kamakura-shi, Kanagawa-ken (JP); Temmyo, Takashi, Tokyo-to (JP)
(74) Representative: Burt, Roger James, Dr.

(56) References cited:
- PROC. OF THE INT. CONFERENCE ON SYSTEM ENGINEERING 1984, pages 306 - 311; K. HASEGAWA ET AL.: 'MFG (Mark flow graph)-based programmable controller and its application to FMS'
- IEEE TRANSACTIONS ON COMMUNICATIONS. vol. COM35, no. 6, June 1987, NEW YORK US pages 577 - 583; S.C. BROFFERIO: 'A petri net control unit for high-speed modular signal processors'
- ANGEWANDTE INFORMATIK. APPLIED INFORMATICS. vol. 27, no. 4, April 1985, BRAUNSCHWEIG DE pages 160 - 166; A. SCHÖNE: 'Über die Realisierung von Petrinetzen durch Schaltwerke'

## Description

The invention relates to a method and a system for mutual exclusive control of resources sequentially available in an event driven process. The sequentially available resources to be controlled are resources that are controlled by a computer, a programmable logic controller or the like.

Important subjects in the recent computer technology are multitasking, multiprocessing and distributed processing. To implement these techniques, it is necessary to share a resource between several tasks or processes during parallel execution of a plurality of tasks or processes. Such a resource is called a shared resource, which includes, for example, various peripheral devices, disks, memories, communication lines, programs, and data. A shared resource that is allowed to be appropriated to one task or process at a time is called a critical resource.

The problem of mutual exclusive control of resource in an event driven process arises when event driven processes are executed in parallel, and they use the shared resource. The mutual exclusive resource control is a mechanism for assuring that the shared resource will be held by at most one process. An area which holds a shared resource in the processes executed in parallel is called a critical section. It is a problem of sharing a resource when a plurality of tasks are executed in parallel, and is presented as a problem of interprocess communication and synchronisation. To solve it, conventionally, various techniques are proposed, and it is analysed by a model for use in a system. The synchronisation problem includes the mutual exclusion problem, the producer consumer problem, the dining philosopher problem, or the readers/writers problem.

At present, there is no way of solving a problem of the mutual exclusive resource control between a plurality of processes, which is important in implementing a parallel execution system, but a programmer carefully writes, by using semaphores. Thus, when a programmer writes a program executing in parallel, or when an operator executes a program under such environment, attention must be always payed to resource assignment. It is a burden for the programmer or the operator.

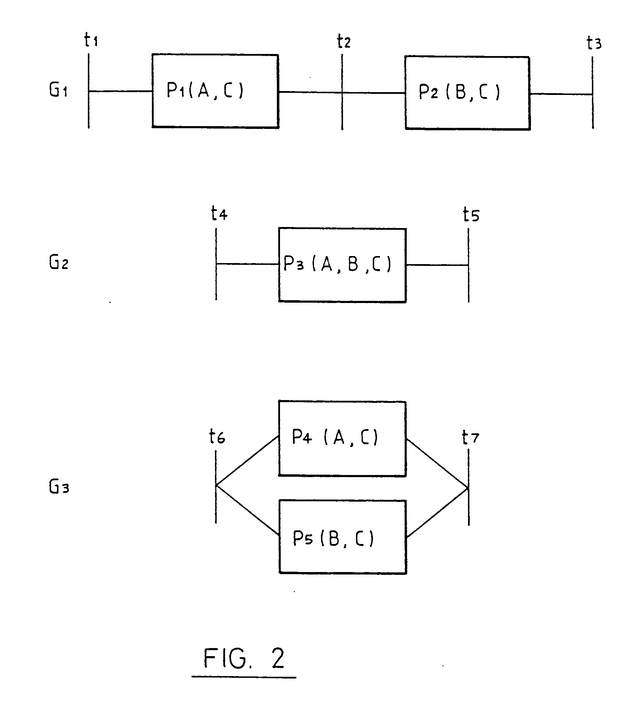

An example of programming using semaphores will be explained below. Now, it is assumed that there are three flows of event driven processes G₁, G₂ and G₃ schematically shown in Figure 2. In the first flow of process G₁, tasks p₁ and p₂ are sequentially processed. After the task p₁ is executed while using shared resources A and C, the task p₂ is executed while using shared resources B and C.

In the second flow of process G₂, a task P₃ is executed. The task P₃ is executed while using the shared resources A, B and C. In the third flow of process G₃ tasks P₄ and P₅ are executed in parallel. The task P₄ is executed while using the shared resources A and C, and the task P₅ is simultaneously executed while using the shared resources B and C. t₁ - t₇ indicate start or end points of the tasks. It is assumed that, among the resources appearing in Figure 2, critical resources are A and B, and that the critical resource A is a robot 2, while the critical resource B is a robot 1.

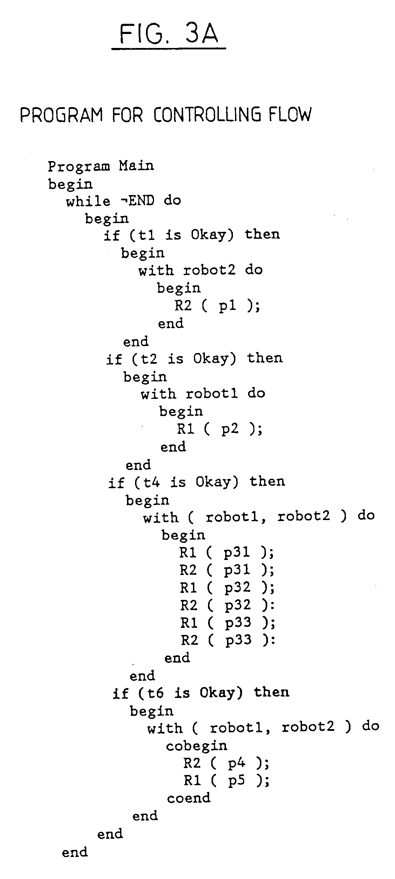

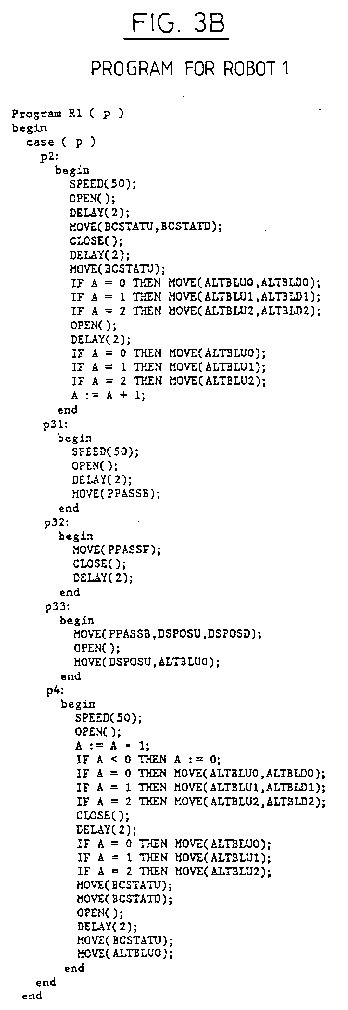

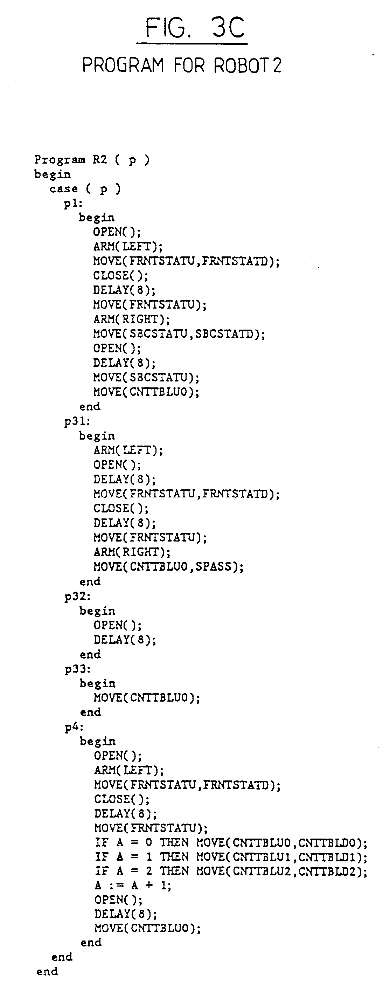

At present, in most cases, programming is performed on each critical resource (controller for production apparatus in a manufacturing process, or a computer in a network system), which requires a program on each critical resource and a program for controlling them. An example of this is shown in Figure 3. Figure 3A is a program for controlling the entire system, Figure 3B being a program for the robot 1, Figure 3C being a program for the robot 2.

Here, syntax for describing the parallel execution is as follows:
cobegin
P1;
P2
coend
wherein P1 and P2 are tasks executed in parallel.

In addition, syntax for describing a critical section is as follows:
with R do
begin
S
end
wherein R is a unique name for a critical resource to be mutually excluded, and S is a critical section to be mutuaily excluded. In this case, R is a semaphore.

In Figure 3A, R(p) is a program for a robot indicated in Figures 3B and 3C, respectively. When a parameter p is passed to R, the program for R executes only the task for p.

The syntax for describing the critical section and its mechanism, as well as the syntax for describing the parallel execution and its mechanism are not supplied to the programmer generally, so that it becomes responsibility of the programmer to write the description, to produce its mechanism, and to debug the mutual exclusive control.

Now, there is one technique called Petri-Net that is widely used for modelling of a system. Features of the Petri-Net are parallelism or simultaneousness and asynchronism. Its execution may be considered to be a series of discrete events, and the timing when an event occurs is indefinite. It has been attempted to utilise these features and the execution form for the event driven control. The Petri-Net is also used in simulation of a parallel execution system (a computer model, or a manufacturing process) by noticing its good mathematical analysis characteristics and high modelling capability.

Now, the overview of Petri-Net will be explained.

The Petri-Net consists of four components: a place, a transition, an arc, and a token. The place indicates an event, the transition indicates a condition, the arc indicates a path, and the token indicates a state. The token moves in the arc between the places according to the condition of the transition, and causes an event corresponding to the place.

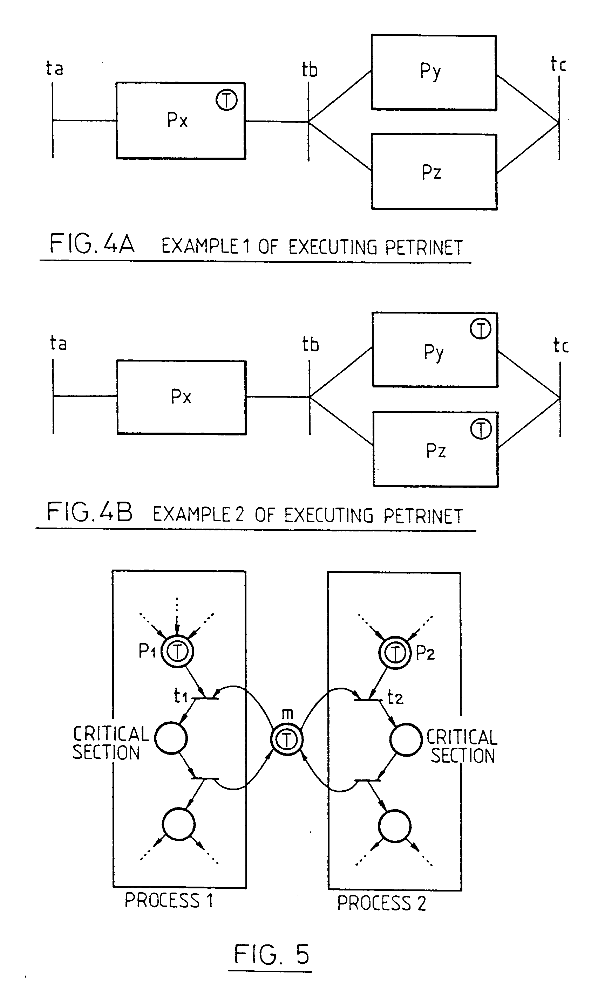

Figure 4 shows an example of execution of the Petri-Net. In this example, explanation is made by using a transition T = {tₐ, t_{b}, t_{c}}, place P = {Pₓ, P_{y}, P_{z}}, and a token. First, if there is no token in Pₓ, tₐ generates a token and places it in Pₓ (Figure 4A). If Pₓ has a token, and P_{y} and P_{z} do not have a token, t_{b} transfers the token to P_{y} and P_{z} (Figure 4B). P_{y} and P_{z} have a token, t_{c} takes out and erases the token. For the details of the Petri-Net, reference should be made to Peterson, J. L., "Petri Net Theory and the Modelling of Systems," Prentice-Hall Inc., 1981.

Recently, a system is proposed wherein a programmer describes a flow of processes as shown in Figures 2 or Figure 4 by using a graphic editor, and converts it into codes to create a program for controlling the entire system so that, while instructing start of the task or receiving a termination signal, the token is automatically transferred according to these signals based on the program in execution. For example, reference should be made to Hasegawa, K. and Takahashi, K., "MFG (Mark Flow Graph)-Based Programmable Controller and its Application to FMS," Proceedings of the International Conference on System Engineering, pp. 306 - 311, 1984.

Also, reference should be made the document by K. Hasegawa et al.: ′MFG (Mark flow graph)- based programmable controller and its application to FMS′, which shows the use of a Mark Flow Graph (MFG) deduced from the Petri net. A marked flow graph is stored in a programmable controller and is used in a control system having among its properties; asynchronism and concurrency. In the nodes of the graph, called boxes and indicating the condition of a system element, are stored marks or tokens to control the system state. A transition is uniting are or more input boxes with one or more output boxes. The firing of a transition to another system state is performed only when all input boxes have marks therein.

However, none of these conventional control systems takes the mutual exclusive control into consideration.

Although it is for an aspect in modelling rather than programming, modelling of the mutual exclusive control is performed by creating a place corresponding to an empty state of resource (empty place), connecting it to a place of a task using that resource to establish a critical section. In this case, it utilises storability that is an important characteristic of the Petri-Net. The empty place contains a token as an initial marking, and always contains a token when a resource is not used. When a process is in a critical section, and using a resource, the empty place does not contain a token. If another process attempts to enter the critical section for using the same resource, it cannot be executed because the empty place does not contain a token and a fire condition is not satisfied. Execution of another process is caused to wait until the process using the resource ends, releases the resource, and returns the token to the empty place.

Figure 5 shows an example of such modelling. Place m indicates authorisation to enter a critical section. When a process wants to enter the critical section, it supplies a token to p₁ or p₂ issuing a sign that indicates its wish to enter the critical section, and waits for a sign allowing entrance into the critical section or the token of m to access the critical section. If both processes want to enter the critical section, transitions t₁ and t₂ cause contention, and only one of them can be fired. Fire of t₁ disables that of t₂, and the process 2 is caused to wait until the process 1 completes the critical section and returns the token to m.

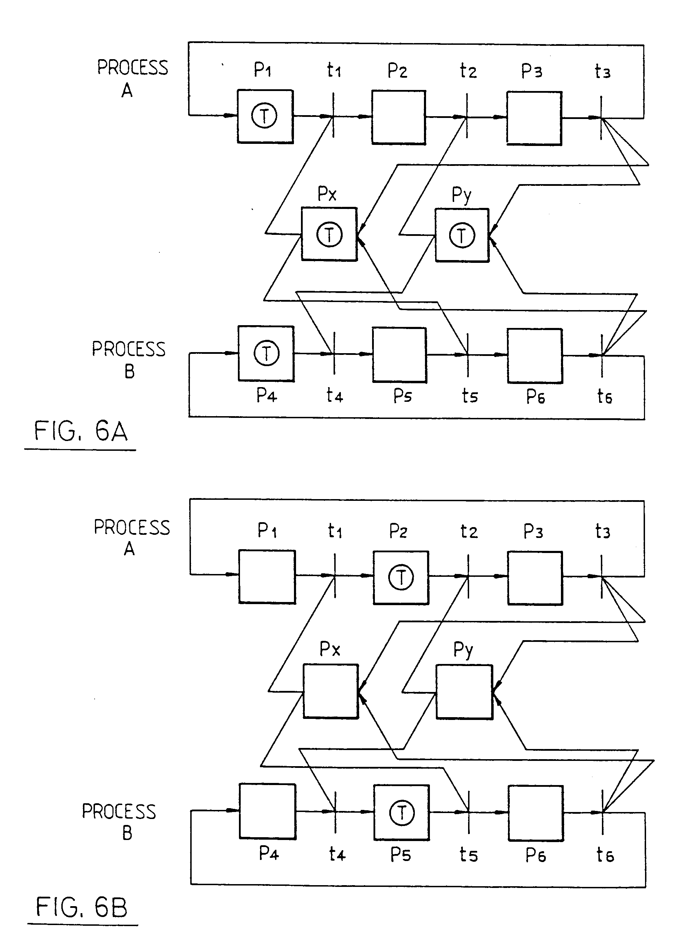

Then, can the mutual exclusive control be easily implemented if a graph having empty places for critical resources is created, and converted into codes so as to create a control program for the entire system taking the mutual exclusive control into consideration, and the token is automatically transferred as the system described in the above reference (2)? Unfortunately, the answer is "No." The reason is described below.
(1) First, empty places must be incorporated in the Petri-Net. If a programmer incorporates the empty places in a suitable location in the Petri-Net while paying attention to critical resources, his effort will be equivalent to programming using semaphores. The creation of the Petri-Net becomes very difficult for a slightly complicated case as Figure 6 compared with a simple case as Figure 5 aside.
(2) In execution, a user must first distinguish the empty places (resource places) from task places, and then place initial tokens in all empty places. This imposes a significant burden on the user.
(3) A deadlock may be caused from the representation of the Petri-Net itself.

Now, it is explained by taking Figure 6 as an example. It is assumed that the current state is as shown in Figure 6A. That is, the tasks P₁ and P₄ are being executed, and the resources Pₓ and P_{y} are empty. The resource Pₓ is used by the tasks P₂, P₃ and P₆. The resource P_{y} is used by the tasks P₃, P₅ and P₆.

If the state is as shown in Figure 6A, then it is clear that the control system can start the execution of the tasks P₂ and P₅. Thus, t₁ and t₄ transfers the tokens to P₂ and P₅, respectively. Here, it should be noted that, because the representation as shown in Figure 5 or Figure 6 connects each end of the critical section to the empty place of the resource, the token is never transferred to the empty place of Pₓ until the execution of the task P₃ following the task P₂ is completed, and that, similarly, the token is never transferred to the empty place of P_{y} until the execution of the task P₆ following the task P₅ is completed. Figure 6B shows the positions of the tokens after starting the execution of the tasks P₂ and P₅. Now, the control system cannot start the execution of the task P₃ even if the execution of the task P₂ is completed because there is no token in the empty place of P_{y}. A token is never returned to the empty place of Pₓ unless the execution of the task P₃ is started. Thus, the execution of the task P₆ is also not started. In this way, the transitions t₂ and t₅ cannot fire and thus causes a deadlock. In the Petri-Net, transitions that cannot fire or their set is called a deadlock.

In a mathematical representation, G = (P, T, O) where G is the Petri-Net structure, P = {P₁, P₂, ... P_{M}) is a set of places and M > O, and T = (T₁, T₂, ... T_{L}} is a set of transitions and L > 1. The set of places and the set of transitions are disjoint, and P ∩ T = φ. I : P → T is an input function from a place to a transition. O : T → P is an output function from a transition to a place. A Petri-Net structure to which a marking » for assignment of a token to a place is added is called a marked Petri-Net. The token exists only in the place, and fire of the transition controls execution. Fire of the transition transfers a token from an input place to an output place. The Petri-Net structure is dual in the graph theory. The concept of dual of a graph is not utilised in the marked Petri-Net because the dual of a graph is difficult to define.

A method for mutual exclusive resource control according to the present invention comprises steps of:
(a) generating a graph and retaining the graph in a storage apparatus, the graph comprising nodes to which tasks included in a process flow and a critical resource, which may be appropriated by at least one of the tasks, are mapped, nodes of tasks executed sequentially being arranged in series, nodes of tasks executed in parallel being arranged in parallel with each other, a node of critical resource being arranged in parallel with every node of the task that may appropriate the critical resource; and
(b) each time a signal for beginning execution of a task is transmitted, generating a token in the node of the task and the critical resource node in parallel therewith; and
(c) when the end of execution of the preceding task in the process flow is detected, referring to said graph; and causing the transmission of a signal for beginning execution of the immediately succeeding tasks to wait while a token is assigned to at least one of the immediately succeeding task node and the critical resource node arranged in parallel therewith.

It is preferable, in the step (a), to provide nodes of the gates in the graph at a location where nodes of the tasks being sequentially executed are connected;
in the step (b), every time the completion of the execution of a task is detected, to remove the node of the task and a token assigning to a critical resource that is arranged in parallel to that node; and
when completion of execution is detected for tasks corresponding to every task node arranged immediately before a gate node, to generate a token in the gate node, and then, while a token is assigned to any one of a node for a succeeding task arranged immediately after the gate node or a node of a critical resource arranged in parallel with it, to cause the transmission of a signal for beginning the execution of the succeeding task to wait by referring to the graph; and to
remove the token from the gate node after the transmission of the signal for beginning the execution of the succeeding task.

A preferred system for mutual exclusive resource control according to the invention comprises a storage device holding a graph that has tasks contained in a flow of process and nodes corresponding to a critical resource capable of being exclusively appropriated by any of the tasks, and in which nodes of tasks being sequentially executed are arranged in serial, nodes of the tasks being executed in parallel being arranged in parallel with each other, a node of a gate being arranged at a location connecting the nodes of the tasks with each other, a node of a critical resource being arranged in parallel with the nodes of all tasks capable of exclusively occupying the critical resource;
a means for generating tokens in a node of the task in the graph and in a node of a critical resource arranged in parallel with the node every time a task beginning signal is transmitted;
a means for removing the tokens assigning to the node of the task and to the node of the critical resource arranged parallel with the node every time the end of the execution of the task is detected;
when a completion of execution is detected for tasks corresponding to every task node arranged immediately before a gate node, generating a token in the gate node, and then, while a token exists in any one of a node for a succeeding task arranged immediately after the gate node or a node of a critical resource arranged in parallel with it, causing the transmission of a signal for beginning the execution of the succeeding task to wait by referring to the graph; and
a means for removing the token from the gate node after the signal for beginning the succeeding task is transmitted.

An embodiment of the invention will now be described in detail with reference to the following figures.

Figure 1 is a system configuration of an embodiment according to the invention.

Figure 2 is a schematic view of the flow of the process.

Figures 3A, 3B and 3C are diagrams illustrating the description of an example of a mutual exclusive control program according to the prior art.

Figure 4 is a diagram illustrating an example of execution of a Petri-Net.

Figure 5 is a diagram illustrating a model of mutual exclusive control employing the Petri-Net.

Figure 6A and 6B are diagrams illustrating a deadlock that would occur if a conventional Petri-Net were executed to perform the mutual exclusive control.

Figure 7 is a diagram illustrating a process flow graph.

Figure 8 is a diagram illustrating a process flow graph and a task program.

Figure 9 is a diagram illustrating a resource management graph.

Figure 10 is a flowchart of processing procedures for generating a resource management graph.

Figure 11 is a flowchart of processing procedures for generating a process resource graph.

Figure 12 is a diagram illustrating a process resource graph.

Figure 13 is a flowchart of processing procedures for generating a union graph of a program flow graph and a resource management graph.

Figure 14 is a diagram illustrating a flow of process that causes a deadlock.

Figure 15 is a diagram showing a union graph representation of the contents of Figure 14.

Figures 16A, 16B, 16C, 16D, 16E, 16F are diagrams showing an example of execution of the process resource graph of Figure 12.

Figure 17 is a diagram showing an example of hardware configuration of a mutual exclusive control system.

Figure 18 is a diagram showing the process resource graph corresponding to Figure 6.

Figures 19A, 19B, 19C and 19D are diagrams showing an example of execution of the process resource graph of Figure 18.

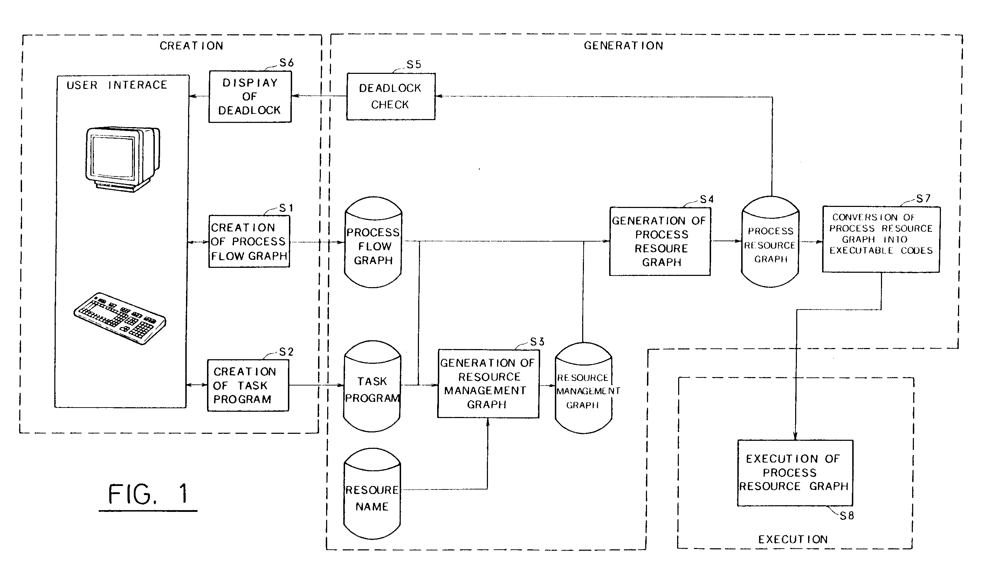

Figure 1 is a system configuration of an embodiment of the invention. Now, steps S1 - S8 in the figure are described in order.

### (a) Creation of a process flow graph (step S1)

A user creates a process flow graph representing an event driven process with a task as a unit of process. The created process flow graph is equivalent to a restricted Petri-Net graph with a safe and active nature (without multibranch nor self loop). Refer to the "Mathematical Representation" for the definition of the process flow graph.

As methods for creating the process flow graph, there are a method in which it is described with graphical symbols by using a graphics editor, and converted to a text representation, and a method in which it is directly described with character codes by using a text editor. The created process flow graph is also called a process flow program.

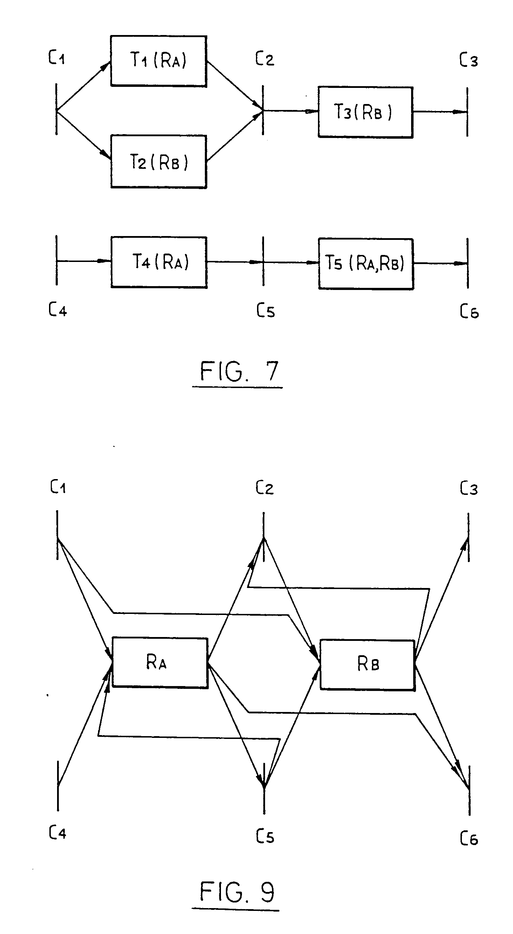

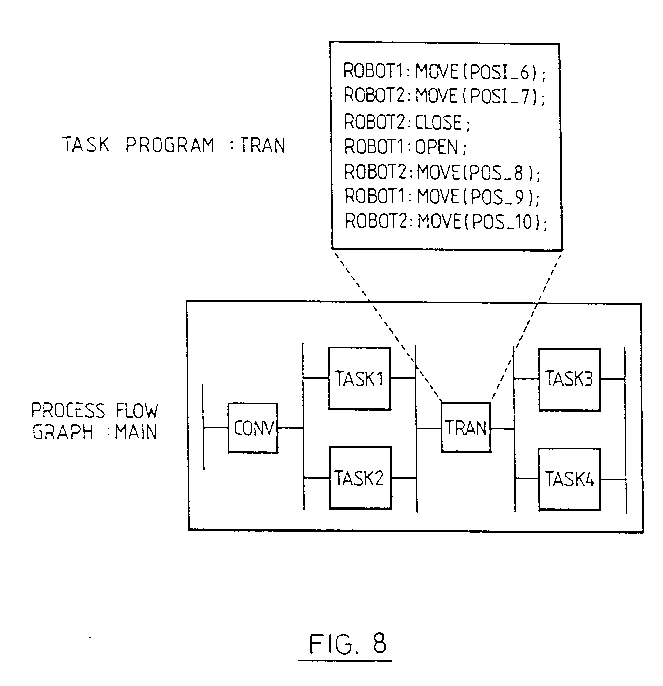

In the embodiment, the user describes it interactively with a graphics editor. Figure 7 shows a graphical representation of the process flow program. A unit of control on the process flow graph is called a task, which corresponds to a program file (see Figure 8).

An example of execution according to the definition of the process flow graph is explained by referring to Figure 7. A token is generated in a condition gate C₁ or C₄. In a case where the token is generated in the condition gate C₁, the token moves to task places T₁ and T₂ where tasks T₁ and T₂ are executed by using resources R_{A} and R_{B}. When both tasks T₁ and T₂ are completed, the token moves to a task place T₃ according to the condition of the condition gate C₂. The task T₃ is executed by using the resource R_{B}. Then, when the task T₃ is completed, the token moves from the place T₃ to the condition gate C₃, and is removed. In a case where the token is generated in the condition gate C₄, the token moves to a task place T₄ where the task T₄ executed by using the resource R_{A}. When the task T₄ is completed, the token moves to a task place T₅ according to the condition of the condition gate C₅. The task T₅ is executed by using the resources R_{A} and R_{B}. Then, when the task T₅ is completed, the token moves from the place T₅ to the condition gate C₃, and is removed. This example of execution does not contain the mutual exclusive resource control. Here, the condition gate corresponds to the transition in the Petri-Net, but definitely differs from the transition in the point that it allows a token to be assigned to itself. This will be explained in detail later.

A text representation of the process flow program is created in the form of intermediate codes of the process flow graph. It is equivalent to the graphical representation, and they can be converted to each other. In the following, the text representation of the graph is also called the intermediate codes.

The format of the intermediate codes of the process flow graph is as follows:
Condition gate:
Input place(, input place ...)/
Output place (, output place ...)

The intermediate codes of the embodiment in Figure 7 is as follows.
C₁ : /T₁, T₂
C₂ : T₁, T₂/T₃
C₃ : T₃/
C₄ : /T₄
C₅ : T₄/T₅
C₆ : T₅/

### (b) Generation of resource management graph (steps S2 and S3)

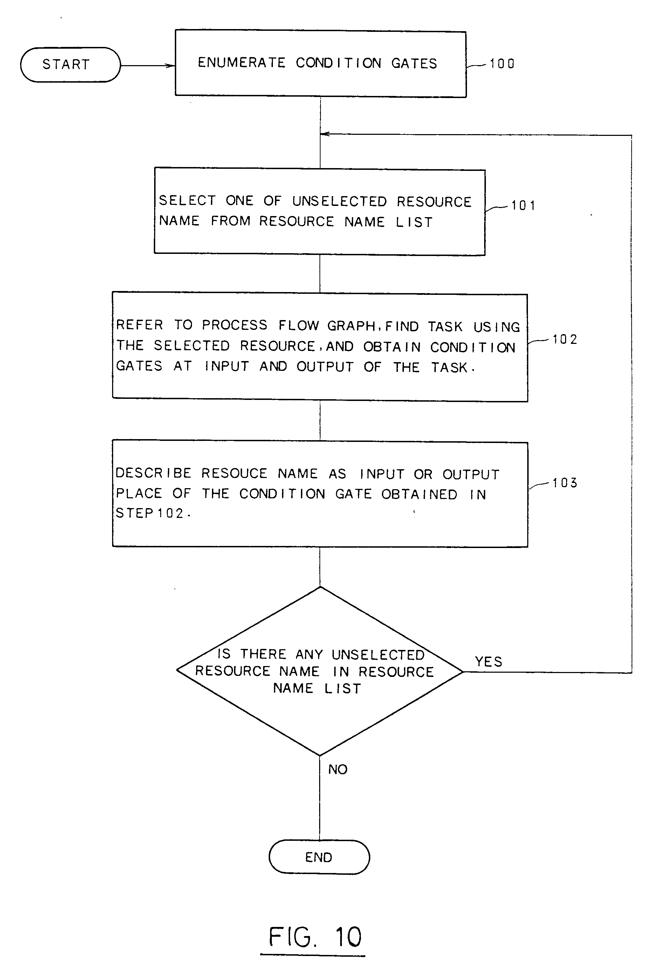

A resource management graph is generated from the process flow graph and the task program. Resource names of critical resources necessary for the tasks are extracted from the task programs, thereby generating a list of them. As shown in Figure 8, when the task program is described in a text, the critical resources described therein are described by logical symbols of the resources, logical numbers of the resources, or logical names of the resources. A resource management graph is generated from the process flow graph and the list which extracted the resource names. Figure 9 shows a resource management graph generated from the process flow graph of Figure 7 and the resource name list of the critical resources necessary for the tasks.

It should be noted that, as shown in Figure 8, the user is never required to pay attention to resource management by using semaphores or the like, in creating a program of a process flow graph describing connection between tasks, or a task program describing an individual task.

In the embodiment, the program is described with an object oriented language by using a text editor in the following format.
Logical name of resource : command

A list is created that extracts the names of the critical resources used by the task from the logical names of critical resources in the task programs. A resource management graph is generated from the list and the process flow graph.

If the form at of the intermediate codes of the resource management graph is made the same as that of the intermediate codes of the process flow graph, the intermediate codes for the embodiment of Figure 9 is as follows:
C₁ : /R_{A}, R_{B}
C₂ : R_{A}, R_{B}/R_{B}
C₃ : R_{B}/
C₄ : /R_{A}
C₅ : R_{A}/R_{A}, R_{B}
C₆ : R_{A}, R_{B}/

Figure 10 is a flowchart illustrating an algorithm for generating such intermediate codes from the process flow graph with the resource name list. If all resources are critical, the resource name list may be created by automatically extracting all resource names contained in the task program. The user may create the resource name list by specifying the critical resource names.

### (c) Generation of process resource graph (steps S4, S5, and S6)

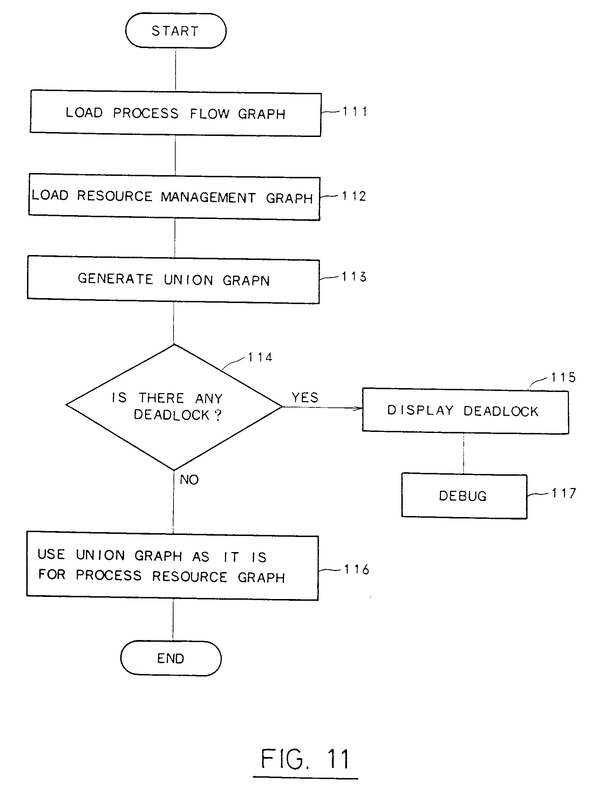

The process for generating the process resource graph is shown in Figure 11 as a flowchart. Explanation is made by referring to the flowchart. The process flow graph and the resource management graph are loaded (steps 111 and 112), from which a graph of union is generated (step 113).

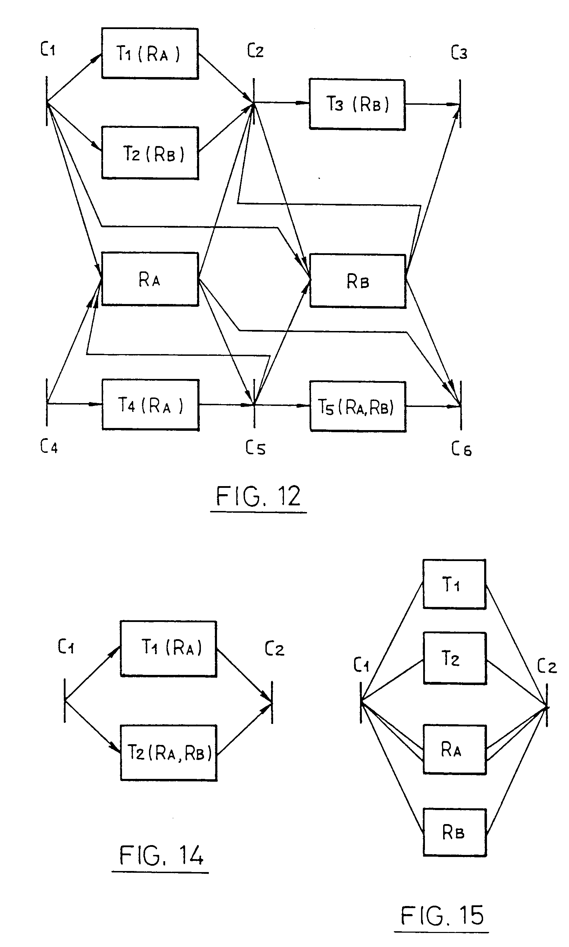

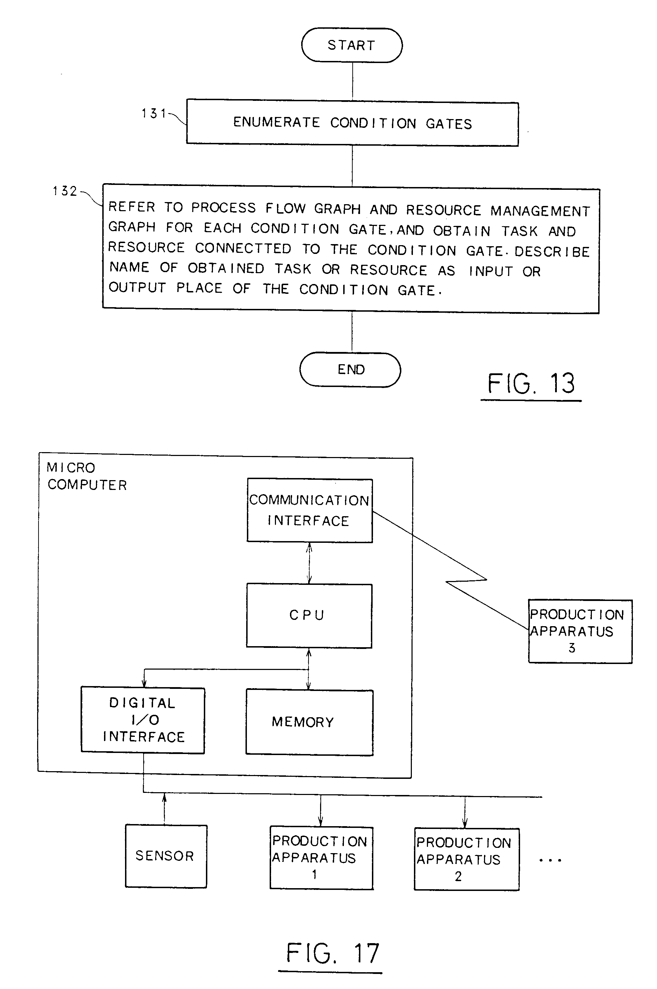

Figure 12 shows graph of union generated from the process resource graph of Figure 7 and the resource management graph of Figure 9.

If the form at of the intermediate codes of the union graph is made the same as that of the intermediate codes of the process flow graph, the representation of the union graph of Figure 12 is as follows:
C₁ : /T₁, T₂, R_{A}, R_{B}
C₂ : T₁, T₂, R_{A}, R_{B}/T₃, R_{B}
C₃ : T₃, R_{B}/
C₄ : /T₄, R_{A}
C₅ : T₄, R_{A}/T₅, R_{A}, R_{B}
C₆ : T₅, R_{A}, R_{B}/

Figure 13 is a flowchart illustrating an algorithm for generating such intermediate codes from the process flow graph and the resource management graph. That is, it shows the step 113 of Figure 11 in detail.

By the way, if the union graph thus generated is unconditionally regarded as a process resource graph as it is, a deadlock may be caused.

Figure 14 shows a case where a deadlock is caused. In the initial state, a token is in the condition gate C₁. The deadlock is caused because the task T₁ should be executed while using the resource R_{A}, and the task T₂ should be executed while using the resources R_{A} and R_{B}.

The embodiment uses a graph that causes no deadlock of a common connection graph as the process resource graph. When execution is performed according to this, it is possible to simultaneously perform the control of an event driven process and the mutual exclusive resource control. If the common connection graph causes a deadlock, it is reported to the user.

In the embodiment, the deadlock that may be caused in the common connection graph is displayed (step 115) after checking a deadlock at the time when the common connection graph is generated from the process flow graph and the resource management graph (step 114).

Figure 15 is a representation of Figure 14 in the form of a union graph. As shown in Figure 15, a deadlock occurs in a case where a condition gate and a resource place are connected in duplicate. It is sufficient to check whether or not the generated union graph has a resource connected to one condition gate in duplicate, and to point it out to the user if there is one. If no deadlock occurs, the union graph is used as the process resource graph as it is (step 116).

Here, the deadlock referred to herein is not caused from the graph representation described with respect to Figure 6 and from the responsibility of the system that performs control according to it. As described later, occurrence of the deadlock as in Figure 6 is avoided according to the invention. The deadlock displayed in step 115 of Figure 11 is caused from the program structure itself, which should be avoided on the responsibility of the user (step 117).

The process resource graph is a bipartite directed graph, nodes of which are event places and condition gates, and arcs of which are input functions and output functions. Marking means to assign tokens to the task places, the resource places, or the condition gates of the process resource graph. In addition, at most one token can exist in one task place, one resource place, or one condition place. In a conventional Petri-Net, a token is not assigned to a condition gate, while assigned in the process resource graph. Refer to the "Mathematical Representation" for the definition of the process resource graph.

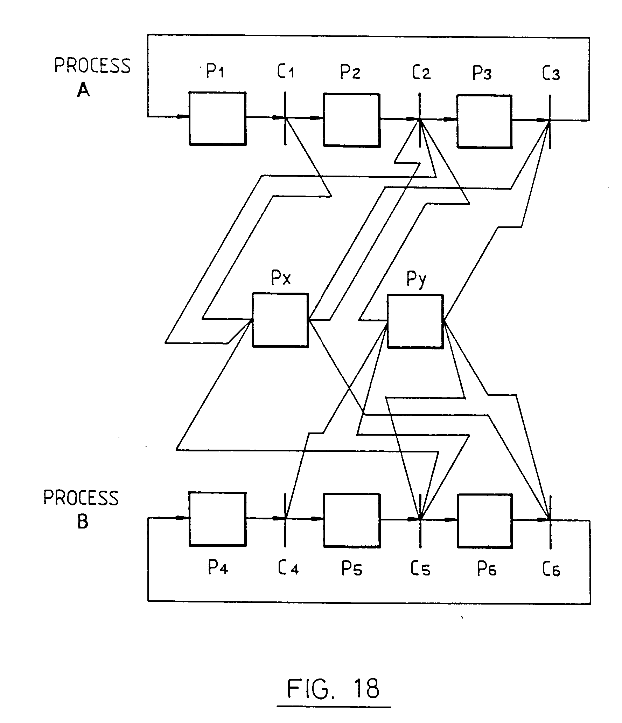

In the union graph or the process resource graph shown in Figure 12, every task node is arranged in parallel with a resource node. However, some tasks never access the critical resource. Of course, no resource node is arranged in parallel with such a task node (see Figure 18).

### (d) Execution of process resource graph (steps S7 and S8)

The process resource graph is converted into codes for a controller that performs event driven control together with the mutual exclusive control of sequentially available resources, and loaded in the memory or ROM of a controller to be executed (such as a computer or a programmable logic controller). When this graph is executed, the mutual exclusive control and the event driven process control are simultaneously performed. For example, a node (an event place or a condition gate) of a process resource graph is implemented in a memory as a data structure, and the connection between elements is represented by pointers. Information relating to presence of a token is stored in the data structure. The method itself for generating or erasing a token is implemented similarly to the system of the above reference (2), and is not described in detail herein.

The conditions for transferring the token presented by the invention are strictly represented by equations (1) and (2), which will be represented by words as follows:
(I) As soon as the beginning of execution of a task is instructed, a token is assigned to the place (node) of the task and the resource place in parallel with the place. That is, according to the invention, different from the conventional Petri-Net, the token placed in the resource place indicates that the resource is appropriated by the task being executed.
(II) If there are tasks controlled in parallel, the tokens are transferred to a succeeding condition gate at the time when execution of all the tasks is completed.
(III) While a token is assigned to at least one of the task places immediately after the condition gate and the resource place in parallel with the task places, the beginning of the execution of the succeeding task is caused to wait by keeping the token in the condition gate.

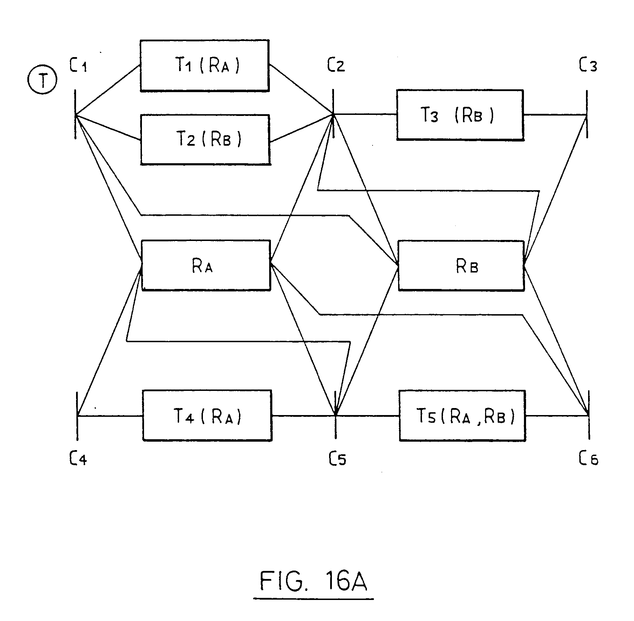

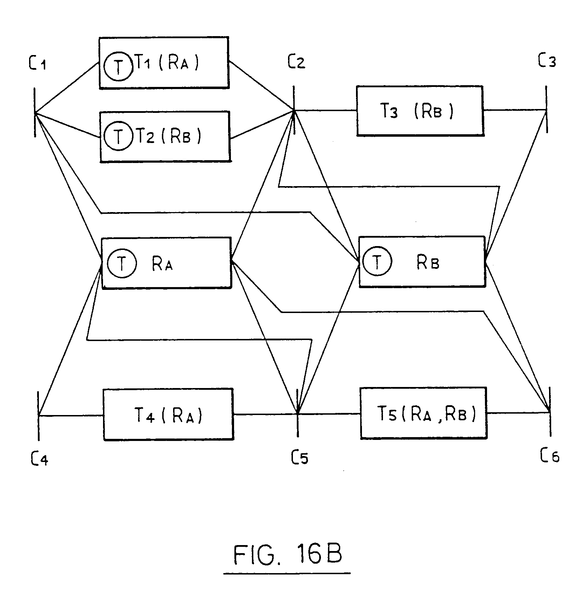

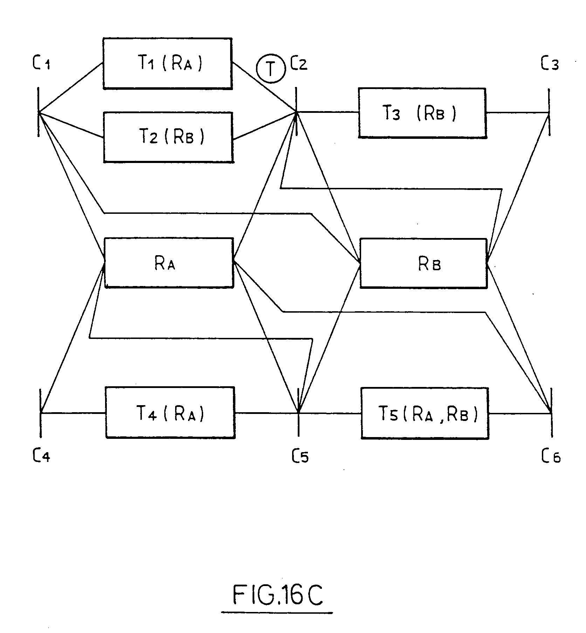

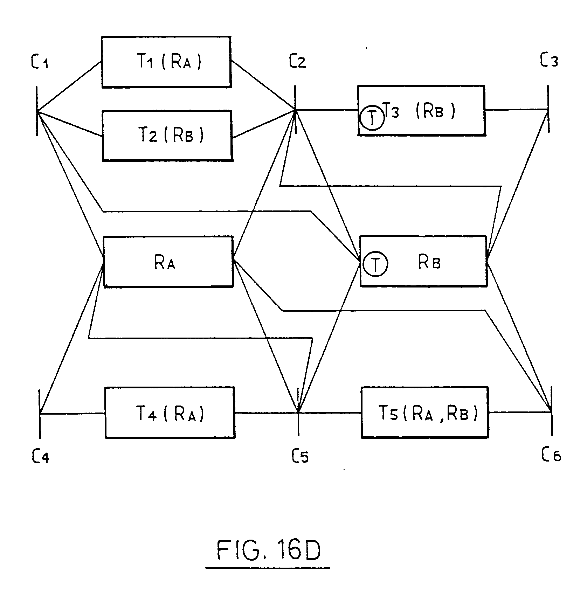

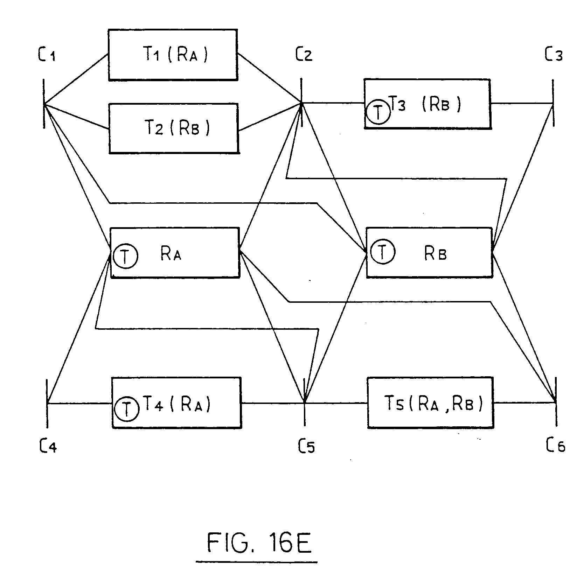

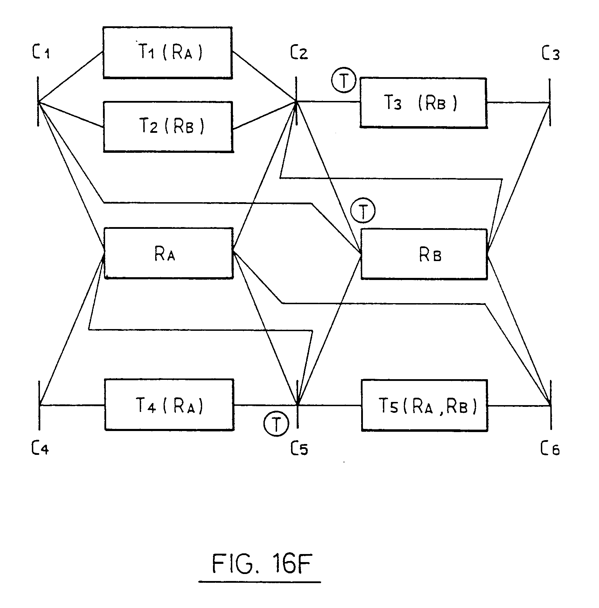

Figure 16 shows the execution according to the definition of the process resource graph of Figure 12 as an example of execution control. In Figure 12, there is a case where a token is generated first in the condition gate C₁, and a case where it is generated first in the condition gate C₄. This example of execution treats the case where the token is generated first in the condition gate C₁. The token is generated in the condition gate C₁ (Figure 16A). As shown, even if it is necessary to execute the task T₁ and T₂, tokens are not immediately placed in the places T₁ and T₂. First, the token is assigned to the condition gate C₁. The token moves from the condition gate C₁ to the task places T₁ and T₂, and the resource place R_{A} and R_{B} according to the transfer condition equation (1) (Figure 16B). At this moment, even if a token is assigned to another condition gate, the transfer condition equation (1) is not satisfied because a token is assigned to the resource places R_{A} and R_{B}. Therefore, the token does not move, and a new task other than T₁ and T₂ is not executed. When both tasks T₁ and T₂ are completed, the token moves from the task places T₁ and T₂ and the resource places R_{A} and R_{B} to the condition gate C₂ according to the transfer condition equation (2) (Figure 16C). In addition, the token moves from the condition gate C₂ to the task place T₃ and the resource place R_{B} (Figure 16D). At this moment, it is assumed that a token is generated in the condition gate C₄. The execution of the task T₄ can now be started. That is, because there is no token in the resource place R_{A}, the transfer condition equation (1) is satisfied so that the token is transferred to the task place T₄ and the resource place R_{A} (Figure 16E). Therefore, the execution of the task T₃ using the resource R_{B} and the execution of the task T₄ using the resource R_{A} are performed independently. When T₄ is completed, the token moves from the task place T₄ and the resource place R_{A} to the condition gate C₅ (Figure 16F). Even if a token is assigned to the condition gate C₅, the token is not transferred from the condition gate C₅ to the task place T₅ and the resource places R_{A} and R_{B}, because another token already is assigned to the resource place R_{B} and the transfer condition equation (1) is not satisfied. That is, the task T₅ is not executed. When the task T₃ is completed, the token moves from the task place T₃ and the resource place R_{B} to the condition gate C₃ according to the transfer condition equation (2), and is removed. Therefore, the task T₅ becomes executable.

As seen from the example of Figure 12, the process resource graph becomes a graph having self loops with respect to the resource places R_{A} and R_{B}. When it is regarded as a restricted Petri-Net with a safe and active nature, if tasks attempt to sequentially and immediately use the same resource, a deadlock occurs. For example, in Figure 12, if, the task T₅ attempts to perform execution using the resources R_{A} and R_{B} after the task T₄ completes execution using the resource R_{A}, a graph of a self loop with respect to the resource R_{A} is constituted, and a deadlock is caused because the transfer condition equation (O), which is described later, is never satisfied.

This will be further described. First, it should be noted that the graph representation like Figure 12 itself is novel. (Differences from a conventional Petri-Net will be explained in more detail by comparing Figures 6 and 18 later). Then, it is assumed that a token is placed in a place of a held resource, but not placed in a condition gate in an embodiment. In this example, a token is placed in the places T₄ and R_{A} during execution of the task T₄. Then, even if the control system attempts to begin the execution of the task T₅, that is, even if it attempts to transfer a token from the place T₄ to the place T₅ and the places R_{A} and R_{B}, it is impossible to transfer the token to the place T₅ because a token is already assigned to the place R_{A}. Then, as long as the token cannot move to the place T₅, the token in the place R_{A} cannot be removed.

If a token is caused to exist in a condition gate as defined for the process resource graph, deadlock as in the restricted Petri-Net with safeness and liveness never occur. That is, in the above example, at the time when the execution of the task T₄ is completed, a state where no token is assigned to the place R_{A} appears by removing the token from places T₄ and R_{A}, and by generating a token in the condition gate C₅, so that the token can be transferred from the condition gate C₅ to the places T₅, R_{A}, and R_{B}. That is, the execution of the task T₅ can be started. The significance of assigning a token to a condition gate lies in this point.

The executable codes of the process resource graph are loaded in the memory or ROM of the controller to be executed. Here, sequentially available resources to be controlled are ones that are controlled by a computer or a programmable logic controller (PLC). These resources include not only those actually contained in the controller, but also those that can be controlled through communication or the like. The invention performs the mutual exclusive resource control together with the event driven process control for the sequentially available resources, which are the objects of the control, based on the executable codes of the process resource graph. Figure 17 shows an example of hardware configuration of a system that performs such control by loading the executable codes of the process resource graph. In this example, the production apparatus 1, 2, 3, ... are the critical resources. A task using such apparatus is described in a task program as shown in Figure 8. A signal instructing beginning of the execution of the program and an end signal notifying completion of the execution of the program are transferred between the PLC and the production apparatus through a digital input/output interface or a communication interface. The completion of execution of a task is detected by sending a signal from the production apparatus to the PLC. Otherwise, the PLC may monitor a state of the production apparatus to detect change of the state to the completion state.

In addition, a task program may be stored in the production apparatus, or may be stored in the memory of the PLC for sequential transfer of instructions from the PLC to the production apparatus.

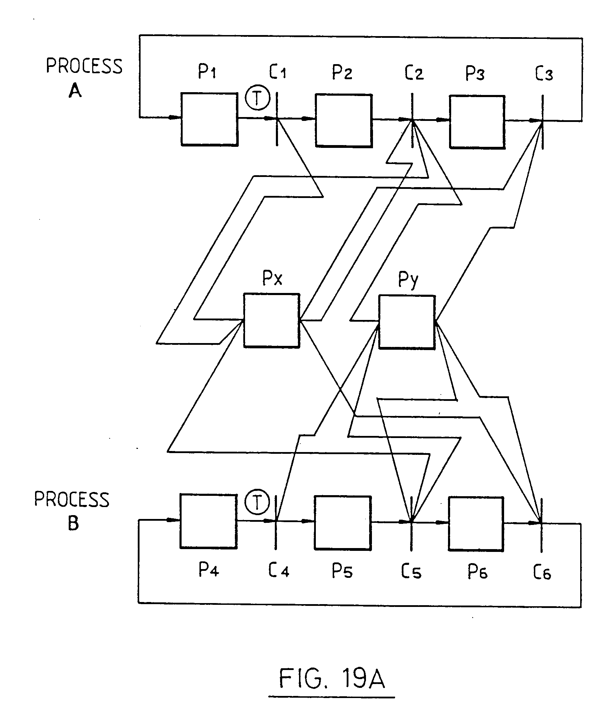

Finally, as a summary, the process resource graph that is a result of representation of the flow of process as shown in Figure 6 according to the invention is shown in Figure 18, and an example of its execution is shown in Figures 19A through 19D.

The graph of Figure 18 differs from that of Figure 6 significantly in the following points. Even when two consecutive tasks (for example, P₂ and P₃) use a resource (in this case, Pₓ), the resource place is connected to each of them in parallel. Relations between the input and the output are reversed. For example, in Figure 6, the place Pₓ is connected to the input of the transition t₁, while, in Figure 18, it is connected to the output of the condition gate C₁.

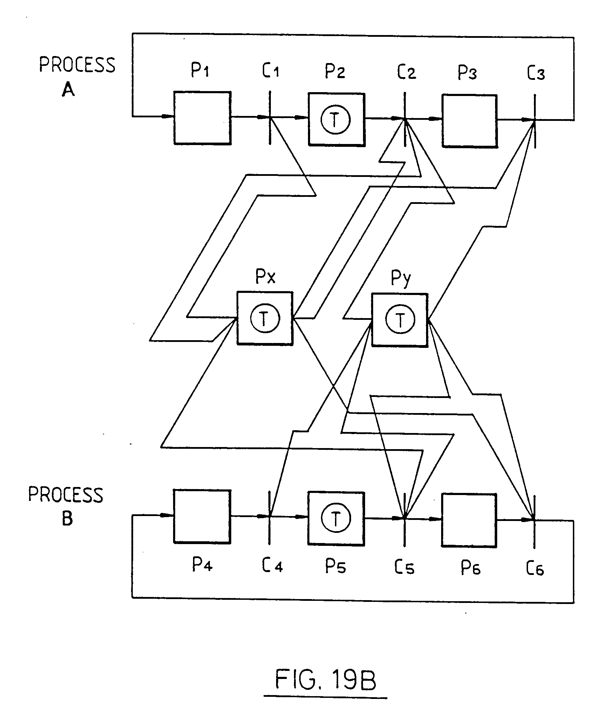

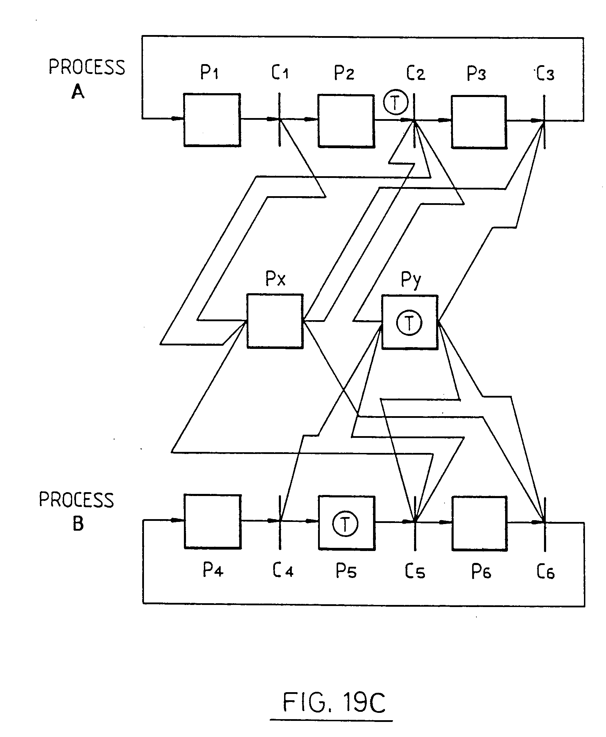

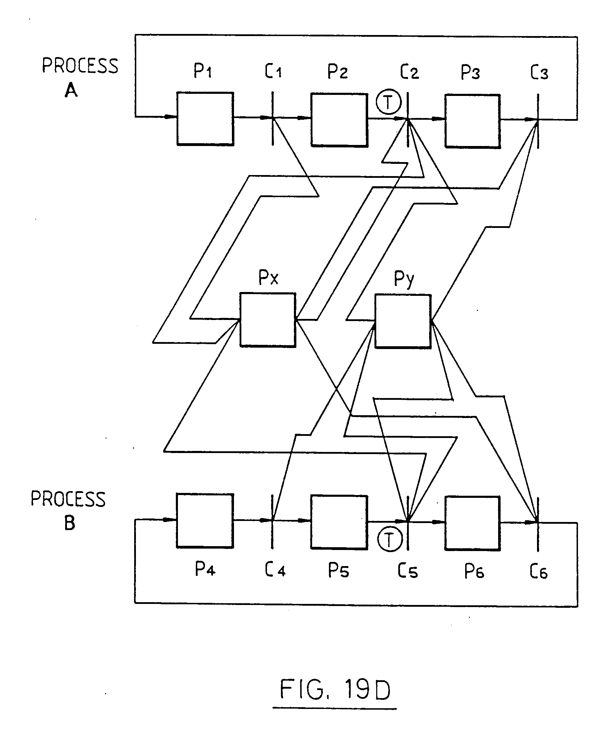

Now, an example of execution is discussed wherein a token is transferred according to the invention. First, it is assumed that tokens are generated in the condition gates C₁ and C₄ (Figure 19A). If there is no token in either of the resource places Pₓ and P_{y}, the token can be transferred from the condition C₁ the places P₂ and Pₓ, while from the condition gate C₄ to the places P₅ and P_{y} (Figure 19B). That is, the execution of the tasks P₂ and P₅ is started. Then, it is assumed that the execution of the task P₂ is completed. At this time, the control system erases the tokens in the places P₂ and Pₓ, and generates a token in the condition gate C₂ (Figure 19C). At the moment, because a token still is assigned to the place P_{y}, it is impossible to transfer the token to the place P₃. Thus, in the process A, the token remains in the condition gate C₂, and waits for release of the resource P_{y}. Then, when the control system receives an end signal of the task P₅, it removes the token from places P₅ and P_{y}, and generates a token in the condition gate C₅ (Figure 19D). The control system may transfer the token to the places P₃, and Pₓ and P_{y}, or may transfer the token to the places P₆ and Pₓ. That is, it can instruct the beginning of the execution of the task P₃ or P₆. As described, deadlock as in Figure 6 never arises.

As above, the invention is explained by referring to the embodiment. Other modifications is possible. For example, although, in the above embodiment, the process flow graph and the resource management graph are generated in a form of intermediate codes, and the process resource graph is once generated in the form of intermediate codes and then converted into executable codes, the form of their representation is not restricted to a specific one because it is sufficient for these graphs to generate in a memory representations equivalent to the ones represented in the drawings.

A description is given according to the definition of the process flow theory in the following. The process flow graph G_{PF} is:${\text{G}}_{\text{PF}} {\text{= (T, C, I}}_{\text{T}} {\text{, O}}_{\text{T}} \text{, »)}$
wherein:
T = {T₁, T₂, ..., T_{M}}, M > 0 Set of task places
C = {C₁, C₂, ..., C_{L}}, L > 1 Set of condition gates
T ∩ C = φ The set of the task places and the set of the condition gates are disjoint.
I_{T} : T → C Input function from a task place to a condition gate
O_{T} : C → T Output function from a condition gate to a task place
» : T → {0, 1} Marking function of a task place
A transfer condition equation of a token from a task place Tᵢ to Tₒ in respect to an arbitrary condition gate C_{K} at an arbitrary time t is: 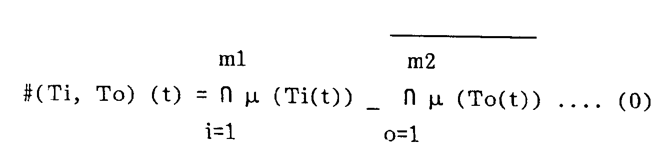
wherein, m1 > 0, m2 > 0
A new marking at time t+1 is: in the task place T₁,$\text{» (Ti(t+1)) = » (Ti(t)) - #(Ti, To) (t) i = 1 ... m1}$
in the task place Tₒ,
$\text{» (To(t+1)) = » (To(t)) + #(Ti, To) (t) o = 1 ... m2}$
A token is generated in a case where there is no input function I_{T} in the condition gate Cₖ, and the right hand terms of the transfer condition equation are made: 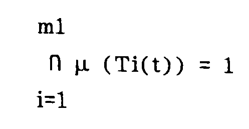
A token disappears in a case where there is no output function O_{T} in the condition gate C_{K}, and the right hand terms of the transfer condition equation are made: 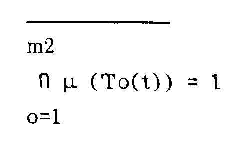
The process resource graph is described according to the definition of the graph theory. The process resource graph G_{PR} is:${\text{G}}_{\text{PR}} {\text{= (T_R, C, I}}_{\text{T-}} {\text{I}}_{\text{R}} {\text{, O}}_{\text{T-}} {\text{O}}_{\text{R}} {\text{,}}_{\text{»T-»R-»C}} \text{)}$
wherein,
T = {T₁, T₂, ..., T_{M}}, M > 0 Set of task places
R = {R₁, R₂, ..., R_{N}}, N ≧ 0 Set of resource places
C = {C₁, C₂, ..., C_{L}}, L > 1 Set of condition gates
T ∩ R ∩ C = φ The set of the task places, the set of resource places and the set of the condition gates are disjoint.
I_{T} : T → C Input function from a task place to a condition gate
I_{R} : R → C Input function from a resource place to condition gate
I_{T} ∩ I_{R} = φ The input function I_{T} and the input function I_{R} are disjoint.
O_{T} : C → T Output function from a condition gate to a task place
O_{R} : C → R Output function from a condition gate to a resource place
O_{T} ∩ O_{R} = φ The output function O_{T} and the output function O_{R} are disjoint.
»_{T} : T → {0, 1} Marking function of the task place »_{R} : R → {0, 1} Marking function of the resource place
»_{C} : C → {0, 1} Marking function of the condition gate
»_{T} ∩ »_{R} ∩ »_{C} = φ The marking function »_{T} , the marking function »_{R},
and the marking function »_{C} are disjoint.

A transfer condition equation of a token from an arbitrary condition gate C_{K} to event places T and R at an arbitrary time t is: 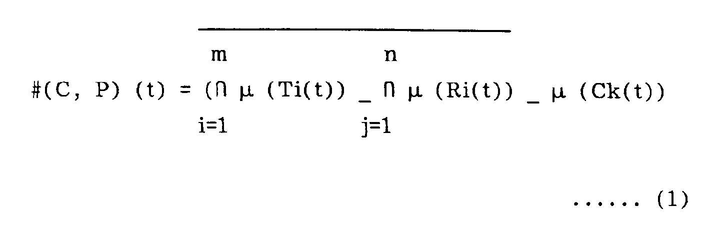
wherein, m > 0, n > 0
A new marking at time t+1 is: in the condition gate C_{K},${\text{» (C}}_{\text{K}} {\text{(t+1)) = » (C}}_{\text{K}} \text{(t)) - #(c, p) (t)}$
in the task place T,$\text{» (Ti(t+1)) = » (Ti(t)) + #(c, p) (t) i = 1 ... m,}$
in the resource place R,$\text{» (Rj(t+1)) = » (Rj(t)) + #(c, p) (t) j = 1 ... n.}$
A transfer condition equation of a token to an arbitrary condition gate C_{K} from event places T and R at an arbitrary time t is: 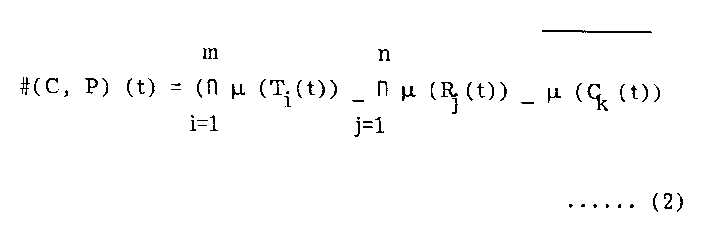
wherein, m > 0, n > 0
A new marking at time t+1 is: in the condition gate C_{K},${\text{» (C}}_{\text{K}} {\text{(t+1)) = » (C}}_{\text{K}} \text{(t)) + #(p, c) (t)}$
in the task place T,${\text{» (T}}_{\text{i}} {\text{(t+1)) = » (T}}_{\text{i}} \text{(t)) - #(p, c) (t) i = 1 ... m,}$
in the resource place R,${\text{» (R}}_{\text{j}} {\text{(t+1)) = » (R}}_{\text{j}} \text{(t)) - #(p, c) (t) j = 1 ... n.}$
A token is generated in a case where there is no input function I_{T} and I_{R} in the condition gate Cₖ, and the right hand terms of the transfer condition equation (2) are made: 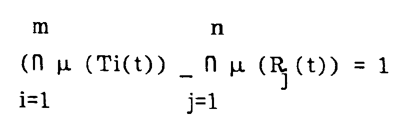
A token is removed in a case where there is no output function O_{T} and O_{R} in the condition gate C_{K}, and the right hand terms of the transfer condition equation (1) are made:

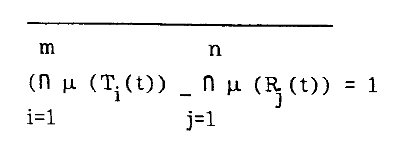

The invention enables a user to perform the mutual exclusive control for sequentially available resources together with the event driven control only by describing an event driven control (the process flow graph and the task program). The invention automatically performs programming and execution for management of resources in a process, for which a programmer was responsible, and removes the burdens of preventing errors in a resource management program from the programmer, and removes the burden of executing the program from the operator.

In addition, the invention provides the advantage that a deadlock which may conventionally occur in a Petri-Net is avoided by assigning a token to a condition gate.

## Claims

1. A method for mutual exclusive resource control comprising steps of:
(a) generating a graph and retaining the graph in a storage apparatus, the graph comprising nodes to which tasks included in a process flow and a critical resource, which may be appropriated by at least one of the tasks, are mapped, nodes of tasks executed sequentially being arranged in series, nodes of tasks executed in parallel being arranged in parallel with each other, a node of critical resource being arranged in parallel with every node of the task that may appropriate the critical resource; and
(b) each time a signal for beginning execution of a task is transmitted, generating a token in the node of the task and the critical resource node in parallel therewith; and
(c) when the end of execution of the preceding task in the process flow is detected, referring to said graph; and causing the transmission of a signal for beginning execution of the immediately succeeding tasks to wait while a token is assigned to at least one of the immediately succeeding task node and the critical resource node arranged in parallel therewith.

2. A method as claimed in Claim 1, comprising in said step (a), providing a gate node in said graph at a location where nodes of tasks executed sequentially are connected:
in said step (b), removing tokens from a task node and a critical resource node arranged in parallel with it, each time the completion of the execution of the task is detected, generating a token in a gate node when completion of tasks corresponding to all the task nodes arranged immediately before the gate node is detected, then, referring to said graph, and causing the transmission of a signal for beginning the execution of a succeeding task to wait while a token is assigned to at least one of the task node and the critical resource node in parallel therewith arranged immediately after the gate node; and removing the token from said gate node after the transmission of the signal for beginning the execution of said succeeding task.

3. A method as claimed in claim 2, wherein said step (a) comprises;
(a 1) creating a process flow graph consisting of nodes of tasks included in the process flow and nodes of gates;
(a 2) creating a resource management graph consisting of nodes of critical resources, which may be appropriated by at least one of said tasks, and nodes of said gates; and
(a 3) creating a graph of union in which said process flow graph and said resource management graph are overlapped with nodes of said gates common, and retaining the graph of union in a storage device.

4. A method as claimed in Claim 3, wherein, after the union graph of the process flow graph and the resource graph are created in said step (a 3), said union graph is checked to see whether or not there is a location where a deadlock occurs, and displaying the union graph to a user if so.

5. A method as claimed in Claim 4, wherein,
in step (a 1), the process flow graph is outputted in the form of intermediate codes;
in step (a 2), the resource management graph is outputted in the form of intermediate codes;
in step (a 3), the union graph is once outputted in the form of intermediate codes, which are converted into executable codes and then retain in a storage device; and
in step (b), mutual exclusive control is performed based on said execution codes.

6. A system for mutual exclusive resource control comprising a storage apparatus retaining a graph in which tasks included in a flow of process, and critical resources, which may be appropriated by at least one task, correspond to nodes, nodes of tasks sequentially executed being arranged in series, nodes of the tasks executed in parallel being arranged in parallel with each other, a node of a critical resource being arranged in parallel with every node of tasks that may appropriate the critical resource;
means for generating tokens in a node of a task and a node of a critical resource arranged in parallel with the task node in said graph each time a signal for beginning execution of the task is transmitted;
means for referring to said graph when the end of execution of a preceding task in the process flow is detected, and causing the transmission of a signal for beginning execution of the immediately succeeding tasks to wait while a token is assigned to at least one of the immediately succeeding task nodes and the critical resource node arranged in parallel therewith.

7. A system as claimed in Claim 6 wherein a node of a gate is arranged in the graph at a location connecting the nodes of the tasks with each other, the system comprising means for removing the tokens assigned to the node of the task and to the node of the critical resource arranged in parallel with the task node each time the end of the execution of the task is detected;
means for generating a token in a gate node, when completion of execution corresponding to all the task nodes arranged immediately before the gate node; and
means for erasing the token in the gate node after the signal for beginning the succeeding task is transmitted.

## Patentansprüche

1. Ein Verfahren zur gegenseitig ausschließenden Betriebsmittelsteuerung, das folgende Schritte umfaßt:
(a) Erzeugen eines Graphen und Festhalten des Graphen in einer Speichervorrichtung, wobei der Graph Knoten umfaßt, denen Tasks, die in einen Prozeßablauf integriert sind, und ein kritisches Betriebsmittel, das sich mindestens einer der Tasks aneignen kann, zugeordnet sind, die Knoten von sequentiell ausgeführten Tasks in Reihe angeordnet sind, die Knoten von parallel ausgeführten Tasks parallel zueinander angeordnet sind und ein Knoten des kritischen Betriebsmittels parallel zu jedem Knoten des Tasks angeordnet ist, der sich das kritische Betriebsmittel aneignen kann; und
(b) bei jeder Übertragung eines Signals für den Beginn der Ausführung eines Tasks Erzeugen eines Balkens in dem Knoten des Tasks und des dazu parallelen Knotens des kritischen Betriebsmittels; und
(c) bei der Erkennung des Endes der Ausführung des vorherigen Tasks im Prozeßablauf Zurückgreifen auf den Graph; und Veranlassen, daß die Übertragung eines Signals für den Beginn der Ausführung der unmittelbar nachfolgenden Tasks wartet, während ein Balken mindestens einem der unmittelbar nachfolgenden Taskknoten und dem parallel dazu angeordneten Knoten des kritischen Betriebsmittels zugeordnet ist.

2. Ein Verfahren gemäß Anspruch 1, umfassend in Schritt (a) das Vorsehen eines Gatterknotens an einer Stelle des Graphen, an der Knoten der Tasks, die sequentiell ausgeführt werden, verbunden sind;
in Schritt (b) das Entfernen von Balken von einem Taskknoten und einem parallel dazu angeordneten kritischen Betriebsmittelknoten bei jeder Erkennung der Vollendung der Ausführung des Tasks, das Erzeugen eines Balkens in einem Gatterknoten bei der Erkennung der Vollendung von Tasks, die zu allen Task-Knoten gehören, die unmittelbar vor dem Gatterknoten angeordnet sind, und dann das Zurückgreifen auf den Graph und das Veranlassen der Übertragung eines Signals zum Beginnen der Ausführung eines nachfolgenden Tasks zum Warten, während ein Balken mindestens einem der Taskknoten und dem parallel dazu unmittelbar nach dem Gatterknoten angeordneten kritischen Betriebsmittelknoten zugewiesen wird; und das Entfernen des Balkens von dem Gatterknoten nach der Übertragung des Signals zum Beginnen der Ausführung des nachfolgenden Tasks

3. Ein Verfahren gemäß Anspruch 2, wobei der Schritt (a) umfaßt:
(a 1) das Erstellen eines Prozeßablaufgraphen, bestehend aus Knoten von Tasks, die in dem Prozeßablauf enthalten sind, und aus Knoten von Gattern;
(a 2) das Erstellen eines Betriebsmittelverwaltungsgraphen, bestehend aus Knoten kritischer Betriebsmittel, die sich mindestens einer der Tasks aneignen kann, und aus Knoten der Gatter; und
(a 3) das Erstellen eines Vereinigungsgraphen, in dem der Prozeßablaufgraph und der Betriebsmittelverwaltungsgraph mit Knoten gemeinsamer Gatter überlappt sind, und das Festhalten des Vereinigungsgraphen in einer Speichervorrichtung.

4. Ein Verfahren gemäß Anspruch 3, bei dem nach dem Erstellen des Vereinigungsgraphen aus Prozeßablaufgraph und Betriebsmittelgraph in Schritt (a 3) der Vereinigungsgraph daraufhin überprüft wird, ob es eine Stelle gibt, an der es zu einer Blockierung kommt, und wenn ja, der Vereinigungsgraph einem Benutzer angezeigt wird.

5. Ein Verfahren gemäß Anspruch 4, bei dem
in Schritt (a 1) der Prozeßablaufgraph in Form von Zwischencodes ausgegeben wird;
in Schritt (a 2) der Betriebsmittelverwaltungsgraph in Form von Zwischencodes ausgegeben wird;
in Schritt (a 3) der Vereinigungsgraph einmal in Form von Zwischencodes ausgegeben wird, die in ausführbare Codes umgewandelt und dann in einer Speichervorrichtung festgehalten werden; und
in Schritt (b) die gegenseitig ausschließende Steuerung auf der Grundlage der Ausführungscodes durchgeführt wird.

6. Ein System für eine gegenseitig ausschließende Betriebsmittelsteuerung, die eine Speichervorrichtung umfaßt, die einen Graph enthält, in dem Tasks, die in einem Prozeßablauf enthalten sind, und kritische Betriebsmittel, die sich mindestens ein Task aneignen kann, zu Knoten gehören, Knoten von Tasks, die sequentiell ausgeführt werden, in Reihe angeordnet sind, Knoten der Tasks, die parallel ausgeführt werden, parallel zueinander angeordnet sind und ein Knoten eines kritischen Betriebsmittels parallel zu jedem Knoten von Tasks angeordnet ist, die sich das kritische Betriebsmittel aneignen können;
ein Mittel zur Erzeugung von Balken in einem Knoten eines Tasks und in einem Knoten eines kritischen Betriebsmittels, der parallel zu dem Taskknoten in dem Graph angeordnet ist, bei jeder Übertragung eines Signals zum Beginnen eines Tasks;
ein Mittel zum Zurückgreifen auf den Graph bei der Erkennung des Endes der Ausführung eines vorhergehenden Tasks in dem Prozeßablauf und Veranlassen der Übertragung eines Signals zum Beginnen der Ausführung der unmittelbar nachfolgenden Tasks zum Warten, während ein Balken mindestens einem der unmittelbar nachfolgenden Taskknoten und dem parallel dazu angeordneten kritischen Betriebsmittelknoten zugewiesen wird.

7. Ein System gemäß Anspruch 6, in dem ein Knoten eines Gatters an einer Stelle des Graphen angeordnet ist, die die Knoten der Tasks miteinander verbindet, wobei das System umfaßt: ein Mittel zum Entfernen der Balken, die dem Knoten des Tasks und dem parallel zu dem Taskknoten angeordneten Knoten des kritischen Betriebsmittels zugewiesen sind, bei jeder Erkennung des Endes der Ausführung des Tasks;
ein Mittel zum Erzeugen eines Balkens in einem Gatterknoten, wenn die Ausführung, die zu allen unmittelbar vor dem Gatterknoten angeordneten Taskknoten gehört, beendet ist; und
ein Mittel zum Löschen des Balkens in dem Gatterknoten nach der Übertragung des Signals zum Beginnen des nachfolgenden Tasks.

## Revendications

1. Procédé pour la commande de ressource mutuellement exclusive comprenant les étapes consistant à :
(a) générer un graphe et conserver le graphe dans un appareil de mémorisation, le graphe comprenant des noeuds sur lesquels des tâches comprises dans un déroulement de processus et une ressource critique, qu'au moins une des tâches peut s'approprier, sont planifiées, les noeuds des tâches exécutées séquentiellement étant agencés en séries, les noeuds de tâches exécutées en parallèle étant agencés en parallèle les uns avec les autres, un noeud de ressource critique étant agencé en parallèle avec chacun des noeuds de la tâche qui peut s'approprier la ressource critique, et
(b) à chaque fois qu'un signal de début d'exécution d'une tâche est transmis, générer un jeton dans le noeud de la tâche et le noeud de ressource critique en parallèle avec celui-ci, et
(c) lorsque la fin de l'exécution de la tâche précédente dans le déroulement du processus est détectée, se référer audit graphe, et provoquer la transmission d'un signal de début d'exécution des tâches immédiatement suivantes en attente alors qu'un jeton est affecté à au moins un parmi le noeud de tâche suivant immédiatement et le noeud de ressource critique agencé en parallèle avec celui-ci.

2. Procédé selon la revendication 1, comprenant dans ladite étape (a), l'approvisionnement d'un noeud de porte dans ledit graphe à un emplacement où les noeuds des tâches exécutées séquentiellement sont reliés :
dans ladite étape (b), la suppression des jetons provenant d'un noeud de tâche et d'un noeud de ressource critique agencé en parallèle avec celui-ci, à chaque fois que l'achèvement de l'exécution de la tâche est détecté, la génération d'un jeton dans un noeud de porte lorsque l'achèvement des tâches correspondant à tous les noeuds de tâche agencés immédiatement avant le noeud de porte soit détecté, puis, la consultation dudit graphe et le déclenchement de la transmission d'un signal de début d'exécution d'une tâche suivante en attente alors qu'un jeton est affecté à au moins un parmi les noeuds de tâche et le noeud de ressource critique en parallèle avec celui-ci agencé immédiatement après le noeud de porte, et la suppression du jeton dudit noeud de porte après la transmission du signal de début d'exécution de ladite tâche suivante.

3. Procédé selon la revendication 2, dans lequel ladite étape (a) comprend,
(a 1) la création d'un graphe de déroulement de processus consistant en des noeuds de tâches inclus dans le déroulement de processus et des noeuds de portes,
(a 2) la création d'un graphe de gestion de ressource consistant en des noeuds de ressources critiques, qu'au moins une desdites tâches peut s'approprier, et de noeuds desdites portes, et
(a 3) la création d'un graphe d'union dans lequel ledit graphe de déroulement de processus et ledit graphe de gestion de ressource se recouvrent avec des noeuds desdites portes en commun, et la conservation du graphe d'union dans un dispositif de mémorisation.

4. Procédé selon la revendication 3, dans lequel après que le graphe d'union du graphe de déroulement de processus et que le graphe de ressource soient créés dans ladite étape (a 3), ledit graphe d'union est vérifié pour voir s'il existe ou non un emplacement où se produit un blocage, et en affichant le graphe d'union à un utilisateur si c'est le cas.

5. Procédé selon la revendication 4, dans lequel,
dans l'étape (a 1), le graphe de déroulement de processus est sorti sous la forme de codes intermédiaires,
dans l'étape (a 2), le graphe de gestion de ressource est sorti sous la forme de codes intermédiaires,
dans l'étape (a 3), le graphe d'union est sorti une fois sous la forme de codes intermédiaires, qui sont convertis en codes exécutables puis conservés dans un dispositif de mémorisation, et
dans l'étape (b), la commande mutuellement exclusive est effectuée sur la base desdits codes d'exécution.

6. Système destiné à la commande de ressource mutuellement exclusive comprenant un appareil de mémorisation conservant un graphe dans lequel les tâches incluses dans un déroulement de processus, et des ressources critiques, qu'au moins une tâche peut s'approprier, correspondent à des noeuds, les noeuds des tâches exécutées séquentiellement étant agencés en séries, les noeuds des tâches exécutées en parallèle étant agencés en parallèle les uns avec les autres, un noeud d'une ressource critique étant agencé en parallèle avec chaque noeud des tâches qui peuvent s'approprier la ressource critique,
un moyen destiné à générer des jetons dans un noeud d'une tâche et un noeud d'une ressource critique agencé en parallèle avec le noeud de tâche dans ledit graphe à chaque fois qu'un signal de début d'exécution de la tâche est transmis,
un moyen pour se référer audit graphe lorsque la fin de l'exécution d'une tâche précédente dans le déroulement de processus est détectée, et pour provoquer la transmission d'un signal de début d'exécution des tâches immédiatement suivantes en attente alors qu'un jeton est affecté à au moins un parmi les noeuds de tâche immédiatement suivants et le noeud de ressource critique agencé en parallèle avec ceux-ci.

7. Système selon la revendication 6 dans lequel un noeud d'une porte est agencé dans le graphe à un emplacement reliant les noeuds des tâches entre elles, le système comprenant un moyen pour supprimer les jetons affectés au noeud de la tâche et au noeud de la ressource critique agencé en parallèle avec le noeud de tâche à chaque fois que la fin de l'exécution de la tâche est détectée,
un moyen de génération d'un jeton dans un noeud de porte, lors de l'achèvement de l'exécution correspondant à tous les noeuds de tâche agencés immédiatement avant le noeud de porte, et
un moyen d'effacement du jeton dans le noeud de porte après que le signal de début de la tâche suivante soit transmis.
